# EUROPEAN PATENT APPLICATION

(11) **EP 4 351 154 A1**
(43) Date of publication of application: **10.04.2024**
(21) Application number: 21944274.6
(22) Date of filing: 03.06.2021
(51) Int. Cl.: H04N 21/462, H04N 21/436, H04N 21/4363, H04N 7/01

(54) **DISPLAY DEVICE AND OPERATING METHOD THEREFOR**

(71) Applicant: LG Electronics Inc., Yeongdeungpo-gu Seoul 07336 (KR)
(72) Inventor: KWON, Jeonghwan, Seoul 06772 (KR); LEE, Eunjung, Seoul 06772 (KR); JEONG, Hyojeong, Seoul 06772 (KR); BAE, Kyungnam, Seoul 06772 (KR); SHIN, Byounghyun, Seoul 06772 (KR)
(74) Representative: Frenkel, Matthias Alexander
(86) International application number: PCT/KR2021/006969
(87) International publication number: WO 2022/255519

(57) **Abstract**

The present disclosure is a display device comprises a communication unit configured to communicate with an external device, a display unit, a control unit configured to receive video data from the external device through the communication unit, and output mirrored video data through the display unit based on whether the video data is rotated and a screen mode of the display device.

## Description

### [Technical Field]

This disclosure relates to a display device and an operating method of the same, and more specifically, to a display device that receives a video from a connected external device and an operating method of the same.

### [Background Art]

A display device is a device that has the ability to receive, process, and display video that a user may view. For example, a display device receives a broadcast signal selected by a user among broadcast signals transmitted from a broadcasting station, separates a video signal from the received signal, and displays the separated video signal on a display.

Additionally, the display device may provide a screen mirroring function that outputs the screen of an external device as is. Specifically, screen mirroring is for displaying videos displayed on a small screen, such as a smartphone or tablet, on a large screen, such as a TV. The display device may display the screen of the external device as is using data received from the external device.

Meanwhile, in external devices such as smartphone and tablet that perform screen mirroring, it is common to view the video content in a height or in a width depending on the type of video content being viewed, however, display device generally provides only landscape mode, so when screen mirroring, there was a problem with not being able to crop and provide the video output through the display device or providing appropriate resolution.

Accordingly, as display device began to support both landscape and portrait modes, a method was needed to output videos without degrading the video resolution during screen mirroring.

### [Disclosure]

### [Technical Problem]

The purpose of the present disclosure is to provide a high-quality video regardless of the landscape mode and portrait mode of the display device when the display device is connected to the user's terminal and outputs a mirroring screen.

### [Technical Solution]

A display device according to the present disclosure may comprise a communication unit configured to communicate with an external device, a display unit, a control unit configured to receive video data from the external device through the communication unit, and output mirrored video data through the display unit based on whether the video data is rotated and a screen mode of the display device.
wherein the control unit may, when the video data received from the external device is height video data rotated by a specific angle, and the screen mode of the display device is landscape screen mode, rotate the height video data rotated by the specific angle in an opposite direction by the specific angle, output a width screen containing height video data rotated in the opposite direction by the specific angle,
wherein the width screen may include a first area where height video data rotated in the opposite direction by the specific angle is output and a second area where black video data is output.
wherein the control unit may, when the video data received from the external device is height video data rotated by a specific angle, and the screen mode of the display device is portrait screen mode, map the video data received from the external device to correspond to the screen size of the display device to output a height screen.
wherein the control unit may, when the video data received from the external device is landscape video data and the screen mode of the display device is landscape screen mode, map the width video data received from the external device to correspond to the screen size of the display device to output a width screen.
wherein the control unit may, when the video data received from the external device is width video data and the screen mode of the display device is portrait screen mode, rotate the width video data received from the external device by a specific angle in a direction opposite to the rotation direction of the display device, and output a height screen including the rotated width video data.
wherein the height screen may include a third area where the rotated width video data is output and a fourth area where black video data is output.

An operating method according to the present disclosure may comprise connecting to an external device, receiving video data from the external device, generating mirroring video data based on whether the video data is rotated and a screen mode of the display device, and outputting the mirroring video data.
wherein the video data may be height video data rotated by a specific angle when the external device is in portrait mode, and the video data may be unrotated landscape video data when the external device is in landscape mode.
wherein the step of generating the mirroring video data based on whether the video data is rotated and the screen mode of the display device may comprise, when the video data received from the external device is height video data rotated by a specific angle, and the screen mode of the display device is landscape screen mode, rotating the height video data rotated by the specific angle in the opposite direction by the specific angle, and generating a width screen including the height video data rotated in the opposite direction by the specific angle.
wherein the width screen may include a first area where height video data rotated in the opposite direction by the specific angle is output and a second area where black video data is output.
wherein the step of generating the mirroring video data based on whether the video data is rotated and the screen mode of the display device may comprise, when the video data received from the external device is height video data rotated by a specific angle, and the screen mode of the display device is portrait screen mode, mapping the video data received from the external device to correspond to the screen size of the display device to generate a height screen.
wherein the step of generating mirroring video data based on whether the video data is rotated and the screen mode of the display device may comprise, when the video data received from the external device is width video data and the screen mode of the display device is landscape screen mode, mapping width video data received from the external device to correspond to the screen size of the display device to generate a width screen.
wherein the step of generating mirroring video data based on whether the video data is rotated and the screen mode of the display device may comprise, when the video data received from the external device is width video data and the screen mode of the display device is portrait screen mode, rotating the width video data received from the external device by a specific angle in a direction opposite to the rotation direction of the display device and generating a height screen including the rotated width video data.
wherein the height screen may include a third area where the rotated width video data is output and a fourth area where black video data is output.

### [Advantageous Effects]

A display device according to an embodiment of the present disclosure may provide video data with video quality without deterioration during mirroring by outputting video data received from an external device based on whether the video data is rotated and the screen mode of the display device.

### [Description of Drawings]

FIG. 1 is a block diagram illustrating a configuration of a display device according to an embodiment of the present disclosure.
FIG. 2 is a block diagram illustrating a remote control device according to an embodiment of the present invention.
FIG. 3 is a view illustrating an actual configuration of a remote control device according to an embodiment of the present invention.
FIG. 4 is a view of utilizing a remote control device according to an embodiment of the present invention.
FIG. 5 is a diagram showing the connection between a display device and an external device according to an embodiment of the present disclosure.
FIG. 6 shows a flow chart according to an embodiment of the present disclosure.
FIG. 7 shows an output screen of an external device according to an embodiment of the present disclosure.
FIG. 8 shows portrait video data transmitted from an external device to a display device according to an embodiment of the present disclosure.
FIG. 9 is a diagram showing an output screen of a display device according to an embodiment of the present disclosure.
FIG. 10 shows an output screen of an external device according to an embodiment of the present disclosure.
FIG. 11 shows landscape video data transmitted from an external device to a display device according to an embodiment of the present disclosure.
FIG. 12 is a diagram showing an output screen of a display device according to an embodiment of the present disclosure.

### [Best Mode]

Hereinafter, embodiments relating to the present disclosure will be described in detail with reference to the drawings. The suffixes "module" and "unit" for components used in the description below are assigned or mixed in consideration of easiness in writing the specification and do not have distinctive meanings or roles by themselves.

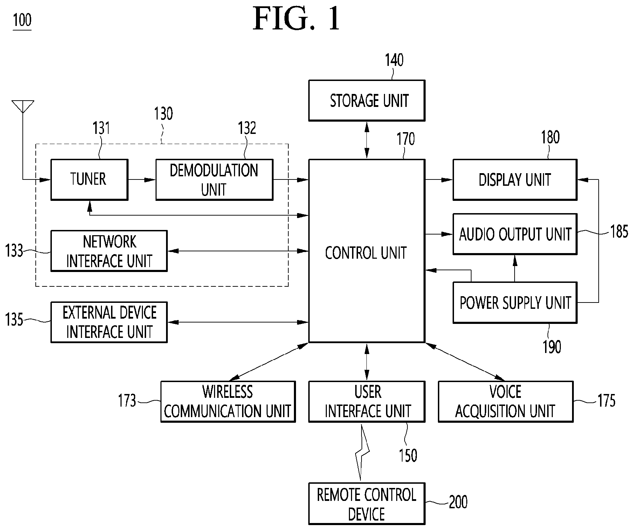

FIG. 1 is a block diagram illustrating a configuration of a display device according to an embodiment of the present invention.

Referring to FIG. 1, a display device 100 may include a broadcast reception unit 130, an external device interface unit 135, a storage unit 140, a user interface unit 150, a control unit 170, a wireless communication unit 173, voice acquisition unit 175, a display unit 180, an audio output unit 185, and a power supply unit 190.

The broadcast reception unit 130 may include a tuner 131, a demodulation unit 132, and a network interface unit 133.

The tuner 131 may select a specific broadcast channel according to a channel selection command. The tuner 131 may receive broadcast signals for the selected specific broadcast channel.

The demodulation unit 132 may divide the received broadcast signals into video signals, audio signals, and broadcast program related data signals and restore the divided video signals, audio signals, and data signals to an output available form.

The network interface unit 133 may provide an interface for connecting the display device 100 to a wired/wireless network including the Internet network. The network interface unit 133 may transmit or receive data to or from another user or another electronic device through an accessed network or another network linked to the accessed network.

The network interface unit 133 may access a predetermined webpage through an accessed network or another network linked to the accessed network. That is, the network interface unit 133 may transmit or receive data to or from a corresponding server by accessing a predetermined webpage through the network.

Then, the network interface unit 133 may receive contents or data provided from a content provider or a network operator. That is, the network interface unit 133 may receive contents such as movies, advertisements, games, VODs, and broadcast signals, which are provided from a content provider or a network provider, through network and information relating thereto.

Additionally, the network interface unit 133 may receive firmware update information and update files provided from a network operator and transmit data to an Internet or content provider or a network operator.

The network interface unit 133 may select and receive a desired application among applications open to the air, through network.

The external device interface unit 135 may receive an application or an application list in an adjacent external device and deliver it to the control unit 170 or the storage unit 140.

The external device interface unit 135 may provide a connection path between the display device 100 and an external device. The external device interface unit 135 may receive at least one a video or audio output from an external device that is wirelessly or wiredly connected to the display device 100 and deliver it to the control unit 170. The external device interface unit 135 may include a plurality of external input terminals. The plurality of external input terminals may include an RGB terminal, at least one High Definition Multimedia Interface (HDMI) terminal, and a component terminal.

A video signal of an external device input through the external device interface unit 135 may be output through the display unit 180. A sound signal of an external device input through the external device interface unit 135 may be output through the audio output unit 185.

An external device connectable to the external device interface unit 135 may be one of a set-top box, a Blu-ray player, a DVD player, a game console, a sound bar, a smartphone, a PC, a USB Memory, and a home theater system, but this is just exemplary.

Additionally, some of the content data stored in the display device 100 may be transmitted to a selected user or selected electronic device among other users or other electronic devices pre-registered in the display device 100.

The storage unit 140 may store signal-processed video, voice, or data signals stored by a program in order for each signal processing and control in the control unit 170.

Additionally, the storage unit 140 may perform a function for temporarily storing video, voice, or data signals output from the external device interface unit 135 or the network interface unit 133 and may store information on a predetermined video through a channel memory function.

The storage unit 140 may store an application or an application list input from the external device interface unit 135 or the network interface unit 133.

The display device 100 may play content files (for example, video files, still video files, music files, document files, application files, and so on) stored in the storage unit 140 and provide them to a user.

The user interface unit 150 may deliver signals input by a user to the control unit 170 or deliver signals from the control unit 170 to a user. For example, the user interface unit 150 may receive or process control signals such as power on/off, channel selection, and screen setting from the remote control device 200 or transmit control signals from the control unit 170 to the remote control device 200 according to various communication methods such as Bluetooth, Ultra Wideband (WB), ZigBee, Radio Frequency (RF), and IR.

Additionally, the user interface unit 150 may deliver, to the control unit 170, control signals input from local keys (not shown) such as a power key, a channel key, a volume key, and a setting key.

Video signals that are video-processed in the control unit 170 may be input to the display unit 180 and displayed as a video corresponding to corresponding video signals. Additionally, video signals that are video-processed in the control unit 170 may be input to an external output device through the external device interface unit 135.

Voice signals processed in the control unit 170 may be output to the audio output unit 185. Additionally, voice signals processed in the control unit 170 may be input to an external output device through the external device interface unit 135.

Besides that, the control unit 170 may control overall operations in the display device 100.

Additionally, the control unit 170 may control the display device 100 by a user command or internal program input through the user interface unit 150 and download a desired application or application list into the display device 100 in access to network.

The control unit 170 may output channel information selected by a user together with processed video or voice signals through the display unit 180 or the audio output unit 185.

Additionally, according to an external device video playback command received through the user interface unit 150, the control unit 170 may output video signals or voice signals of an external device such as a camera or a camcorder, which are input through the external device interface unit 135, through the display unit 180 or the audio output unit 185.

Moreover, the control unit 170 may control the display unit 180 to display videos and control broadcast videos input through the tuner 131, external input videos input through the external device interface unit 135, videos input through the network interface unit, or videos stored in the storage unit 140 to be displayed on the display unit 180. In this case, a video displayed on the display unit 180 may be a still video or video and also may be a 2D video or a 3D video.

Additionally, the control unit 170 may play content stored in the display device 100, received broadcast content, and external input content input from the outside, and the content may be in various formats such as broadcast videos, external input videos, audio files, still videos, accessed web screens, and document files.

Moreover, the wireless communication unit 173 may perform a wired or wireless communication with an external electronic device. The wireless communication unit 173 may perform short-range communication with an external device. For this, the wireless communication unit 173 may support short-range communication by using at least one of Bluetooth^{™}, Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication unit 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication unit 173 may detect (or recognize) a communicable wearable device around the display device 100. Furthermore, if the detected wearable device is a device authenticated to communicate with the display device 100, the control unit 170 may transmit at least part of data processed in the display device 100 to the wearable device through the wireless communication unit 173. Accordingly, a user of the wearable device may use the data processed in the display device 100 through the wearable device.

The voice acquisition unit 175 may acquire audio. The voice acquisition unit may include at least one microphone(no0t shown) and acquire audio of adjacent of display device 100 through a microphone(not shown)

The display unit 180 may convert video signal, data signal, or on-screen display (OSD) signal, which are processed in the control unit 170, or videos signal or data signal, which are received in the external device interface unit 135, into R, G, and B signals to generate driving signal.

Furthermore, the display device 100 shown in FIG. 1 is just one embodiment of the present invention and thus, some of the components shown may be integrated, added, or omitted according to the specification of the actually implemented display device 100.

That is, if necessary, two or more components may be integrated into one component or one component may be divided into two or more components and conFIG.d. Additionally, a function performed by each block is to describe an embodiment of the present invention and its specific operation or device does not limit the scope of the present invention.

According to another embodiment of the present invention, unlike FIG. 1, the display device 100 may receive videos through the network interface unit 133 or the external device interface unit 135 and play them without including the tuner 131 and the demodulation unit 132.

For example, the display device 100 may be divided into a video processing device such as a set-top box for receiving broadcast signals or contents according to various network services and a content playback device for playing contents input from the video processing device.

In this case, an operating method of a display device according to an embodiment of the present invention described below may be performed by one of the display device described with reference to FIG. 1, a video processing device such as the separated set-top box, and a content playback device including the display unit 180 and the audio output unit 185.

The audio output unit 185 receives the audio-processed signal from the control unit 170 and outputs it as audio.

The power supply unit 190 supplies the corresponding power throughout the display device 100. In particular, power may be supplied to the control unit 170, which may be implemented in the form of a system on chip (SOC), the display unit 180 for displaying videos, and the audio output unit 185 for audio output.

Specifically, the power supply unit 190 may include a converter that converts alternating current power to direct current power and a dc/dc converter that converts the level of direct current power.

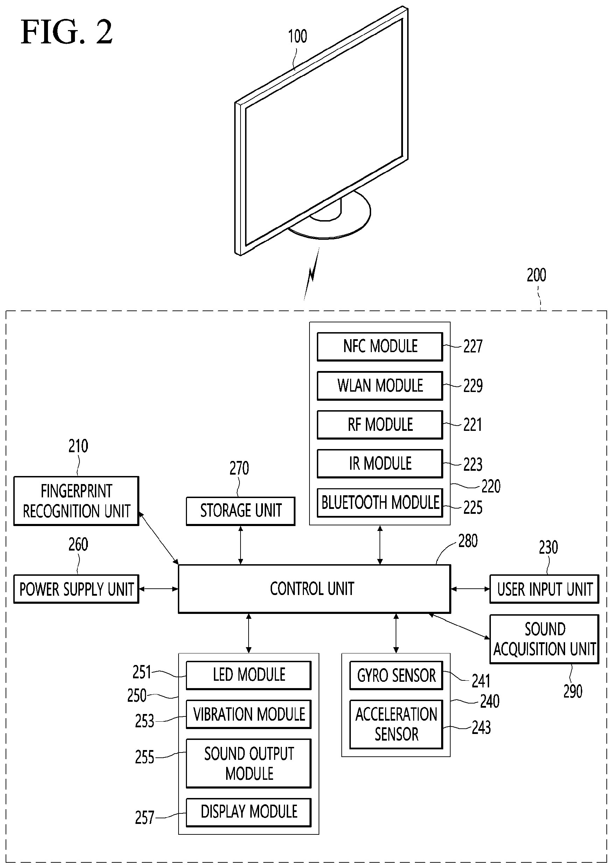

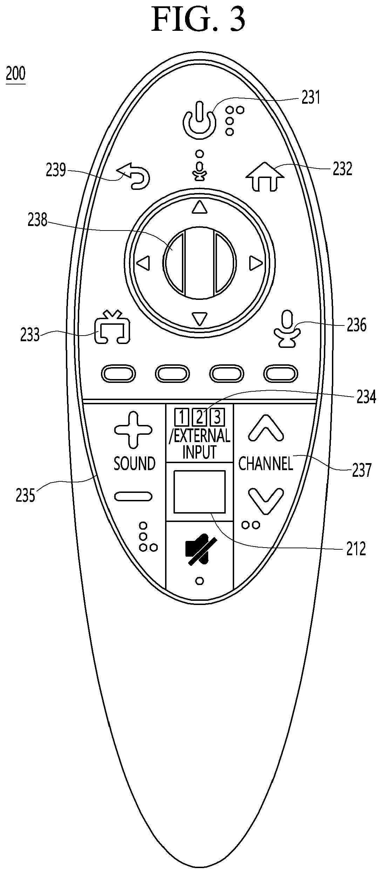

Then, referring to Figs. 2 and 3, a remote control device is described according to an embodiment of the present invention.

FIG. 2 is a block diagram illustrating a remote control device according to an embodiment of the present invention and FIG. 3 is a view illustrating an actual configuration of a remote control device according to an embodiment of the present invention.

First, referring to FIG. 2, a remote control device 200 may include a fingerprint recognition unit 210, a wireless communication unit 220, a user input unit 230, a sensor unit 240, an output unit 250, a power supply unit 260, a storage unit 270, a control unit 280, and a sound acquisition unit 290.

Referring to FIG. 2, the wireless communication unit 220 transmits/receives signals to/from an arbitrary any one of display devices according to the above-mentioned embodiments of the present invention.

The remote control device 200 may include a radio frequency (RF) module 221 for transmitting/receiving signals to/from the display device 100 according to the RF communication standards and an IR module 223 for transmitting/receiving signals to/from the display device 100 according to the IR communication standards. Additionally, the remote control device 200 may include a Bluetooth module 225 for transmitting/receiving signals to/from the display device 100 according to the Bluetooth communication standards. Additionally, the remote control device 200 may include a Near Field Communication (NFC) module 227 for transmitting/receiving signals to/from the display device 100 according to the NFC communication standards and a WLAN module 229 for transmitting/receiving signals to/from the display device 100 according to the Wireless LAN (WLAN) communication standards.

Additionally, the remote control device 200 may transmit signals containing information on a movement of the remote control device 200 to the display device 100 through the wireless communication unit 220.

Moreover, the remote control device 200 may receive signals transmitted from the display device 100 through the RF module 221 and if necessary, may transmit a command on power on/off, channel change, and volume change to the display device 100 through the IR module 223.

The user input unit 230 may be conFIG.d with a keypad button, a touch pad, or a touch screen. A user may manipulate the user input unit 230 to input a command relating to the display device 100 to the remote control device 200. If the user input unit 230 includes a hard key button, a user may input a command relating to the display device 100 to the remote control device 200 through the push operation of the hard key button. This will be described with reference to FIG. 3.

Referring to FIG. 3, the remote control device 200 may include a plurality of buttons. The plurality of buttons may include a fingerprint recognition button 212, a power button 231, a home button 232, a live button 233, an external input button 234, a voice adjustment button 235, a voice recognition button 236, a channel change button 237, a check button 238, and a back button 239.

The fingerprint recognition button 212 may be a button for recognizing a user's fingerprint. According to an embodiment of the present invention, the fingerprint recognition button 212 may perform a push operation and receive a push operation and a fingerprint recognition operation. The power button 231 may be button for turning on/off the power of the display device 100. The home button 232 may be a button for moving to the home screen of the display device 100. The live button 233 may be a button for displaying live broadcast programs. The external input button 234 may be a button for receiving an external input connected to the display device 100. The voice adjustment button 235 may be a button for adjusting the size of a volume output from the display device 100. The voice recognition button 236 may be a button for receiving user's voice and recognizing the received voice. The channel change button 237 may be a button for receiving broadcast signals of a specific broadcast channel. The check button 238 may be a button for selecting a specific function and the back button 239 may be a button for returning to a previous screen.

Again, explains FIG. 2.

If the user input unit 230 includes a touch screen, a user may touch a soft key of the touch screen to input a command relating to the display device 100 to the remote control device 200. Additionally, the user input unit 230 may include various kinds of input means manipulated by a user, for example, a scroll key and a jog key, and this embodiment does not limit the scope of the present invention.

The sensor unit 240 may include a gyro sensor 241 or an acceleration sensor 243 and the gyro sensor 241 may sense information on a movement of the remote control device 200.

For example, the gyro sensor 241 may sense information on an operation of the remote control device 200 on the basis of x, y, and z axes and the acceleration sensor 243 may sense information on a movement speed of the remote control device 200. Moreover, the remote control device 200 may further include a distance measurement sensor and sense a distance with respect to the display unit 180 of the display device 100.

The output unit 250 may output video or voice signals in response to manipulation of the user input unit 230 or video or voice signals corresponding to signals transmitted from the display device 100. A user may recognize whether the user input unit 230 is manipulated or the display device 100 is controlled through the output unit 250.

For example, the output unit 250 may include an LED module 251 for flashing, a vibration module 253 for generating vibration, a sound output module 255 for outputting sound, or a display module 257 for outputting a video, if the user input unit 230 is manipulated or signals are transmitted/received to/from the display device 100 through the wireless communication unit 220.

Additionally, the power supply unit 260 supplies power to the remote control device 200 and if the remote control device 200 does not move for a predetermined time, stops the power supply, so that power waste may be reduced. The power supply unit 260 may resume the power supply if a predetermined key provided at the remote control device 200 is manipulated.

The storage unit 270 may store various kinds of programs and application data necessary for control or operation of the remote control device 200. If the remote control device 200 transmits/receives signals wirelessly through the display device 100 and the RF module 221, the remote control device 200 and the display device 100 transmits/receives signals through a predetermined frequency band.

The control unit 280 of the remote control device 200 may store, in the storage unit 270, information on a frequency band for transmitting/receiving signals to/from the display device 100 paired with the remote control device 200 and refer to it.

The control unit 280 controls general matters relating to control of the remote control device 200. The control unit 280 may transmit a signal corresponding to a predetermined key manipulation of the user input unit 230 or a signal corresponding to movement of the remote control device 200 sensed by the sensor unit 240 to the display device 100 through the wireless communication unit 220.

Additionally, the sound acquisition unit 290 of the remote control device 200 may obtain voice.

The sound acquisition unit 290 may include at least one microphone and obtain voice through the microphone 291.

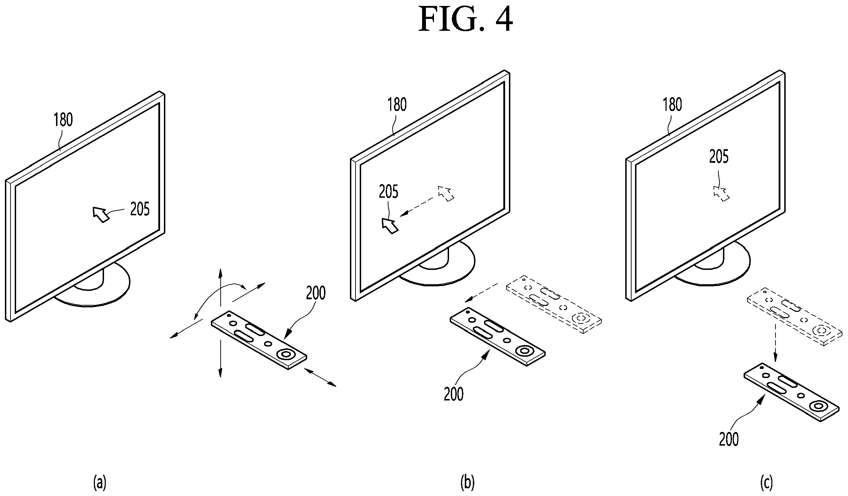

Next, FIG. 4 will be described.

FIG. 4 is a view of utilizing a remote control device according to an embodiment of the present invention.

FIG. 4(a) illustrates that a pointer 205 corresponding to the remote control device 200 is displayed on the display unit 180.

A user may move or rotate the remote control device 200 vertically or horizontally. The pointer 205 displayed on the display unit 180 of the display device 100 corresponds to a movement of the remote control device 200. Since the corresponding pointer 205 is moved and displayed according to a movement on a 3D space as show in the drawing, the remote control device 200 may be referred to as a spatial remote control device.

FIG. 4(b) illustrates that if a user moves the remote control device 200, the pointer 205 displayed on the display unit 180 of the display device 100 is moved to the left according to the movement of the remote control device 200.

Information on a movement of the remote control device 200 detected through a sensor of the remote control device 200 is transmitted to the display device 100. The display device 100 may calculate the coordinates of the pointer 205 from the information on the movement of the remote control device 200. The display device 100 may display the pointer 205 to match the calculated coordinates.

FIG. 4(c) illustrates that while a specific button in the remote control device 200 is pressed, a user moves the remote control device 200 away from the display unit 180. Thus, a selection area in the display unit 180 corresponding to the pointer 205 may be zoomed in and displayed larger.

On the other hand, if a user moves the remote control device 200 close to the display unit 180, a selection area in the display unit 180 corresponding to the pointer 205 may be zoomed out and displayed in a reduced size.

On the other hand, if the remote control device 200 is moved away from the display unit 180, a selection area may be zoomed out and if the remote control device 200 is moved closer to the display unit 180, a selection area may be zoomed in.

Additionally, if a specific button in the remote control device 200 is pressed, recognition of a height or width movement may be excluded. That is, if the remote control device 200 is moved away from or closer to the display unit 180, the up, down, left, or right movement cannot be recognized and only the back and forth movement may be recognized. While a specific button in the remote control device 200 is not pressed, only the pointer 205 is moved according to the up, down, left or right movement of the remote control device 200.

Moreover, the moving speed or moving direction of the pointer 205 may correspond to the moving speed or moving direction of the remote control device 200.

Furthermore, a pointer in this specification means an object displayed on the display unit 180 in response to an operation of the remote control device 200. Accordingly, besides an arrow form displayed as the pointer 205 in the drawing, various forms of objects are possible. For example, the above concept includes a point, a cursor, a prompt, and a thick outline. Then, the pointer 205 may be displayed in correspondence to one point of a width axis and a height axis on the display unit 180 and also may be displayed in correspondence to a plurality of points such as a line and a surface.

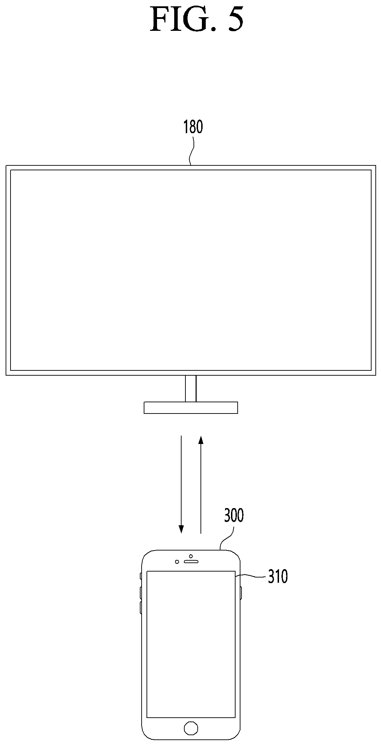

FIG. 5 is a diagram showing the connection between a display device and an external device according to an embodiment of the present disclosure.

The display unit 180 of the display device 100 according to an embodiment of the present disclosure may display a screen of an external device (used interchangeably with a user terminal) connected to the display device 100.

This function may be referred to as screen mirroring or screen casting.

Screen mirroring may include Miracast. The external device 300 may include any device that may be wirelessly connected to the display device 100. For example, external device may include smartphone, laptop, tablet, PC, etc.

In this specification, the description is made assuming that a smartphone is connected to the display device 100 as an external device (300, see FIG. 5), but this is only an example for convenience of explanation, and Various external devices may be connected to the display device 100 other than a smart phone.

The screen mode of the display device 100 may include landscape mode and portrait mode.

The landscape mode of the display device 100 may be a mode in which the long side of the display unit 180 is in the width direction and the short side is in the height direction, as shown in FIG. 5. The portrait mode of the display device 100 may be a mode in which the short side of the display unit 180 is in the width direction and the long side is in the height direction (not shown).

Meanwhile, the screen mode of the external device 300 may also include landscape mode and portrait mode. The landscape mode of the external device 300 may be a mode in which the long side of the display unit 310 is in the width direction and the short side is in the height direction. The portrait mode of the external device 300 may be a mode in which the short side of the display unit 310 is in the width direction and the long side is in the height direction.

The display device 100 is wirelessly connected to the external device 300 and may control the display unit 180 to receive and display a video displayed on the screen 310 of the external device 300.

Additionally, the display device 100 and the external device 300 are wirelessly connected, so the user may control the external device 300 using the screen of the external device displayed on the display unit 180.

The display device 100 may receive video data and coordinate mapping data from the external device 300 through the wireless communication unit 173.

The display device 100 may transmit coordinate mapping data to the external device 300 through the wireless communication unit 173.

The video data may be data related to the video displayed on the screen 310 of the external device 300.

Coordinate mapping data may refer to information about coordinate systems exchanged with each other when the coordinate system used by the connected display device 100 and the external device 300 changes as the display device 100 and the external device 300 rotate from width to height or width to height, respectively.

Video data that the display device 100 according to an embodiment of the present disclosure receives from the external device 300 may include width video data and height video data.

Width video data may refer to video data that the display device 100 receives from the external device 300 when the external device 300 is in landscape mode, and height video data may refer to video data that the display device 100 receives from the external device 300 when the external device 300 is in portrait mode.

Meanwhile, the external device 300 according to an embodiment of the present disclosure may also be a type of terminal or display device, so it should be understood as including all of the configurations in FIG. 1.

Hereinafter, an operation for mirroring a video displayed on an external device by a display device according to an embodiment of the present disclosure will be described.

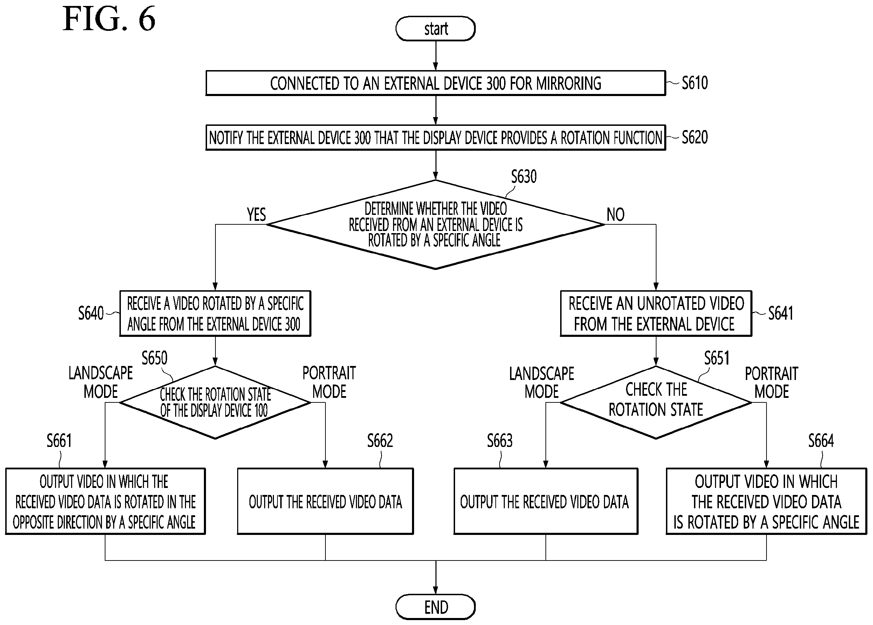

FIG. 6 shows a flow chart according to an embodiment of the present disclosure.

The display device 100 according to an embodiment of the present disclosure may be connected to an external device 300 for mirroring (S610).

As previously explained, the external device 300 may refer to various terminals used by the user, and mirroring may mean outputting video data that maps the video data being output to the external device 300 to the screen size of the display device 100.

The display device 100 according to an embodiment of the present disclosure may notify the external device 300 that the display device provides a rotation function (S620).

Specifically, when the external device 300 and the display device 100 are connected for mirroring, the external device 300 may transmit a signal requesting a response to whether the display device provides a rotation function to check whether the display device 100 supports the rotation function.

The control unit 170 of the display device 100 may provide a response regarding whether to provide the rotation function to an external device through the communication unit.

More specifically, when the display device 100 does not provide a rotation function, the display device 100 may transmit a response signal corresponding to 'does not provide a rotation function' to an external device.

Alternatively, when the display device 100 provides a rotation function, the display device 100 may transmit a response signal corresponding to 'providing a rotation function' to an external device.

Meanwhile, the following description will be made on the premise that the display device 100 provides a rotation function. However, if the display device does not provide a rotation function, it may be understood that an embodiment corresponding to the landscape mode of the display device 100, which will be described later, will be performed.

According to an embodiment of the present disclosure, the external device 300 may transmit different video data to the display device 100 according to the screen mode to be mirrored.

Specifically, when the external device 300 is outputting height video data in portrait mode, the control unit of the external device 300 may rotate the output height video data by a specific angle and send the rotated height video data to the display device 100.

At this time, the specific angle may be a predetermined value and may typically mean 90 degrees, which indicates the rotation of the screen in landscape mode and portrait mode.

According to an embodiment of the present disclosure, the external device 300 rotates the height video data by a specific angle and transmits it to the display device 100, and the control unit 170 of the display device 100 may output a mirroring video by changing the height video data rotated by a specific angle based on the screen mode of the display device 100.

Additionally, when the external device 300 is outputting width video data in landscape mode, the control unit of the external device 300 transmits the output width video data to the display device 100, and the control unit 170 of the display device 100 may output a mirroring video by changing the width video data rotated by a specific angle based on the screen mode of the display device 100.

The control unit 170 of the display device 100 according to an embodiment of the present disclosure may receive a video from an external device. Additionally, the display device 100 may determine whether the video received from an external device is rotated by a specific angle (S630).

As described above, the case that the video received from the external device 300 is rotated by a certain angle may mean that the external device 300 outputs height video data in portrait mode and attempts mirroring.

Alternatively, if the video received from the external device 300 is not rotated, it may be the case that the external device outputs width video data in landscape mode and attempts mirroring.

First, a case where the external device 100 according to an embodiment of the present disclosure outputs height video data and attempts mirroring will be described.

The display device 100 according to an embodiment of the present disclosure receives video data from the external device 300 through the communication unit, and based on whether the video data is rotated and the screen mode of the display device, may include a control unit that outputs mirroring video data through the display unit.

According to an embodiment of the present disclosure, the control unit 170 of the display device 100 may receive a video rotated by a specific angle from the external device 300 (S640).

Specifically, when the external device 300 provides a height video, the video data received from the external device 300 may be height video data rotated by a specific angle. For example, a specific angle may be 90 degrees counterclockwise.

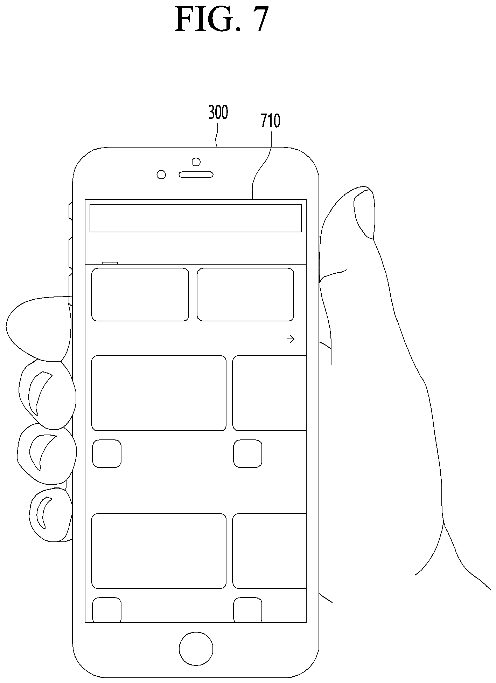

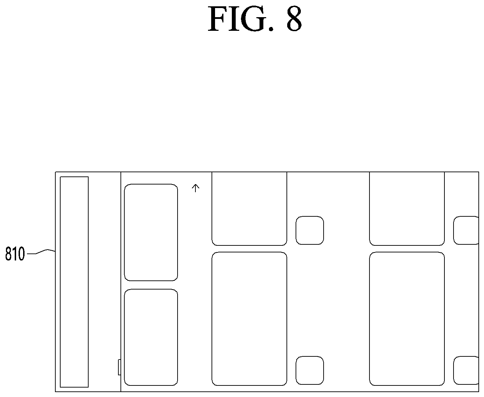

Specifically, it will be described with reference to FIGS. 7 and 8.

FIG. 7 shows an output screen of an external device according to an embodiment of the present disclosure.

Referring to FIG. 7, for example, the external device 300 is a mobile terminal, and a user may run a specific application while holding the mobile terminal in one hand.

The mobile terminal may output height video data 710 in portrait screen mode based on the user's command.

Thereafter, the user may attempt mirroring to view the height video data 710 displayed on the mobile terminal on a large screen such as the display device 100.

The mobile terminal may receive a mirroring attempt command from the user and communicate with the display device to transmit video data for mirroring.

FIG. 8 shows height video data transmitted from an external device to a display device according to an embodiment of the present disclosure.

Referring to FIG. 8, the control unit of the mobile terminal may rotate the height video data by a specific angle (for example, 90 degrees counterclockwise) in order to provide the height video data to the display device without being cut off.

By providing the display device 100 with the video 810 in which the height video data is rotated at a specific angle as described above, the height video data output in the portrait screen mode of the mobile terminal may be set to correspond to the long and short sides of the display device 100.

Specifically, the mobile terminal 300 connected to the display device 100 according to an embodiment of the present disclosure may transmit, to the display device 100, video data 810 obtained by rotating height video data for portrait mode that does not include a black video by a specific angle, as shown in FIG. 8.

At this time, black video may mean a video that is output a remaining area as black after cutting the video data to fit the screen ratio of the display device when transmitting video data from an external device (e.g., a mobile terminal) to the display device.

That is, the display device 100 according to an embodiment of the present disclosure may receive rotated height video data 810 that does not include a black video from the mobile terminal 300.

The display device 100 may provide a mirroring screen that does not cause video quality deterioration in the future by acquiring height video data that does not include a black video.

Meanwhile, since the rotated height video data 810 is rotated in a specific direction (for example, 90 degrees counterclockwise), reprocessing and coordinate mapping are required according to the output mode (landscape mode or portrait mode) of the display device.

FIG. 6 will be described again.

The control unit 170 of the display device 100 according to an embodiment of the present disclosure may check the rotation state of the display device 100 (S650).

At this time, the rotation state of the display device 100 may include the landscape screen mode and portrait screen mode provided by the display device.

When the screen mode of the display device 100 is a landscape screen mode, the control unit 170 of the display device 100 of the present disclosure may rotate the height video data rotated by the specific angle in the opposite direction by the specific angle and output a width screen containing height video data rotated in the opposite direction by a specific angle (S661).

In addition, when the screen mode of the display device 100 is a portrait screen mode, the control unit 170 of the display device 100 of the present disclosure may output a height screen by mapping the video data received from the external device 300 to correspond to the screen size of the display device (S662).

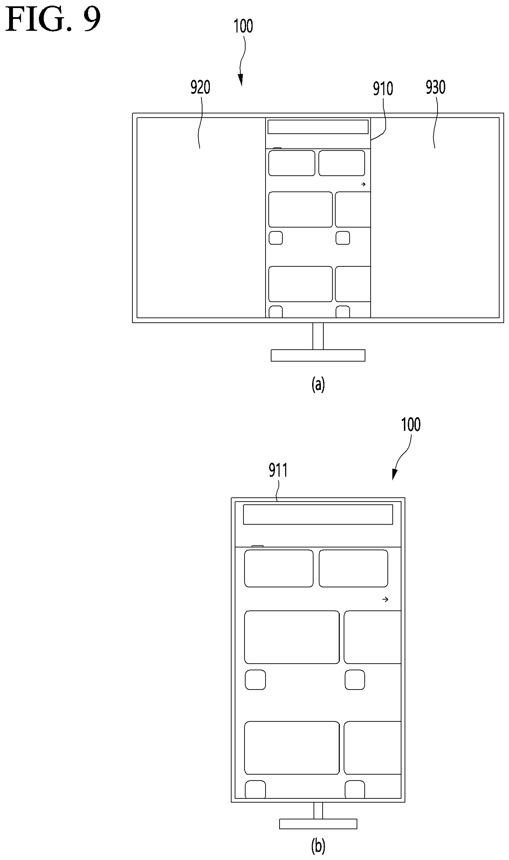

Hereinafter, processes S661 and S662 will be described in detail with reference to FIG. 9.

FIG. 9 is a diagram showing an output screen of a display device according to an embodiment of the present disclosure.

Referring to FIG. 9, output video data suitable for the screen mode of the display unit 180 may be output.

First, referring to FIG. 9(a), in the display device 100 according to an embodiment of the present disclosure, the video data received from the external device is height video data rotated by a specific angle, and the screen of the display device 100 indicates that the mode is landscape screen mode.

In order to create a width screen corresponding to the landscape screen mode, the control unit 170 may rotate the height video data (810 in FIG. 8) rotated by the specific angle in the opposite direction by the specific angle.

Specifically, when the display device 100 is in the portrait screen mode, if the rotated height video data 810 of FIG. 8 is output as is, since the user will view the height video data rotated in a specific direction, FIG. 9(a) may be an embodiment of rotating it to the correct viewing direction.

Meanwhile, according to an embodiment of the present disclosure, when the video data 910 obtained by rotating the height video data in the opposite direction is mapped to the display unit 180 of the display device 100 according to the ratio of the width and height, the display device in the display unit 180 of 100, there may be areas 920 and 930 that are displayed as blank.

Therefore, the control unit (170) of the display device (100) according to an embodiment of the present disclosure may output a width screen, which includes a first region where height video data is output by rotating in the opposite direction by a certain angle and a second region where black video data (920, 930) is displayed

At this time, black video data may mean that the display unit 180 itself outputs a black screen.

For example, the control unit 170 of the display device 100 according to an embodiment of the present disclosure may receive height video data 810 rotated by a specific angle in the landscape video mode, and generate height video data 910 by rotating height video data 810 in the opposite direction by a specific angle.

The control unit 170 of the display device 100 may map the coordinate of the first region such that the long side of the generated height video data 910 corresponds to short side of the display device, and the short side of the height video data 910 corresponds to the long side of the display device.

The control unit of the display device may output a black screen to an area other than the first area.

Referring to FIG. 9(b), it shows a case where the video data received from the external device 300 is height video data rotated by a specific angle, and the screen mode of the display device 100 is portrait screen mode.

The control unit 170 of the display device 100 according to an embodiment of the present disclosure may map the video data received from the external device 300 to correspond to the screen size of the display device and output a height screen.

Specifically, when the display device 100 is in portrait mode and outputs the rotated height image data 810 as shown in FIG. 8, the user will be able to watch it in the correct viewing orientation as depicted in FIG. 9(b) because the rotated height video data is viewed in the opposite direction of a specific direction in the rotated portrait screen mode.

Meanwhile, the rotation direction of the rotated height video data 810 in FIG. 8 and the rotation direction of the portrait mode of the display device 100 may be preferably set to be opposite to each other.

Meanwhile, according to an embodiment of the present disclosure, height video data (FIG. 8, 810) received from the external device 300 and rotated at a specific angle is output as is to the display device 100, so that there is no blank area in the display unit 180 of the display device 100.

Therefore, the control unit 170 of the display device 100 according to an embodiment of the present disclosure may output a video 911 that maps coordinates to correspond to the long side of received height video data 810 to the long side of the display device and to correspond to the short side of height video data 910 to the short side of the display device.

FIG. 6 will be described again.

According to an embodiment of the present disclosure, the control unit 170 of the display device 100 may receive an unrotated video from the external device 300 (S641).

As previously explained, the fact that the received video from an external device (300) is an unrotated image could be because the user is viewing the external device 300 in landscape mode, and mirroring is activated while the external device (300) is outputting a width video.

The display device 100 according to an embodiment of the present disclosure may receive unrotated width video data from the external device 300 through the communication unit.

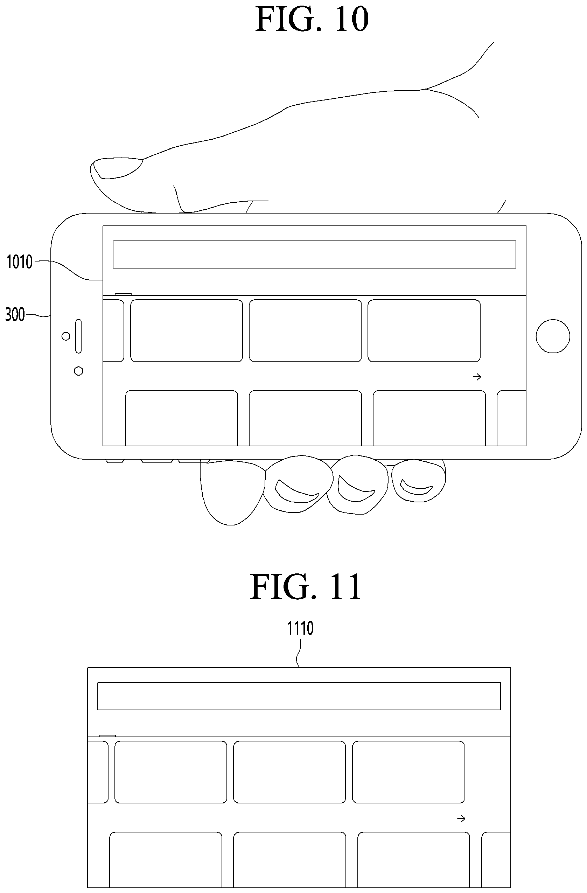

Hereinafter, width video data provided by an external device will be described in FIGS. 10 and 11.

FIG. 10 shows an output screen of an external device according to an embodiment of the present disclosure.

Referring to FIG. 10, for example, the external device 300 is a mobile terminal and the user may run a specific application while holding the mobile terminal in one hand.

The mobile terminal may output width video data 1010 in landscape screen mode based on the user's command.

Thereafter, the user may attempt mirroring to view the width video data 1010 displayed on the mobile terminal on a large screen such as the display device 100.

The mobile terminal may receive a mirroring attempt command from the user and communicate with the display device to transmit video data for mirroring.

FIG. 11 shows width video data transmitted from an external device to a display device according to an embodiment of the present disclosure.

Referring to FIG. 11, even if the width video data that the mobile terminal is outputting in the width video mode is transmitted as is, since a video without cutting off may be provided to the display device, the control unit of the display device may transmit the width video data 1110 without separate rotation to the display device.

By providing width video data to the display device 100 as above, width video data output in the landscape screen mode of the mobile terminal may be set to correspond to the long side and short side of the display device.

FIG. 6 will be described again.

The display device according to an embodiment of the present disclosure may check the rotation state (S651).

At this time, the rotation state of the display device 100 may include the landscape screen mode and portrait screen mode provided by the display device.

Specifically, when the video data received from the external device 300 is width video data and the screen mode of the display device 100 is landscape screen mode, a width screen may be output by mapping to correspond to the width video data received from the external device 300 with the screen size of the display device 100 (S663).

In addition, when the video data received from the external device 300 is width video data and the screen mode of the display device 100 is portrait screen mode, the control unit 170 may rotate the width video data received from the external device 300 by a specific angle in an opposite direction of rotation direction of the display device 100 and output the height screen including the rotated width video data (S664).

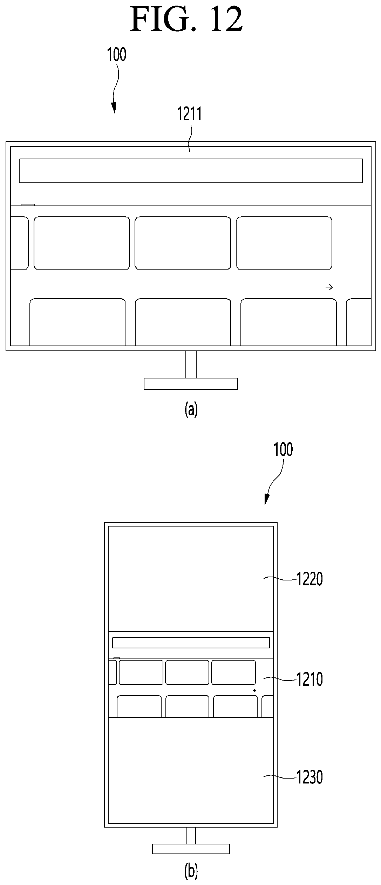

S663 and S664 will be described in detail in FIG. 12.

FIG. 12 is a diagram showing an output screen of a display device according to an embodiment of the present disclosure.

Referring to FIG. 12, the display device may output video data suitable for the screen mode of the display unit 180.

First, referring to FIG. 12(a), the video data received from the external device 300 in the display device 100 according to an embodiment of the present disclosure is width video data, and the screen mode of the display device 100 indicates the landscape screen mode.

The control unit 170 of the display device 100 according to an embodiment of the present disclosure may map the video data received from the external device 300 to correspond to the screen size of the display device 100 and output a width screen.

For example, the coordinate may be mapped so that the long side of the width video data corresponds to the long side of the display device, and the short side of the width video data corresponds to the short side of the display device.

As above, when the display device 100 is in the landscape screen mode, if the width video data 1110 of FIG. 11 is output as is, the user will be able to view it in the correct viewing direction as shown in FIG. 12(a).

Hereinafter, a case where video data received from the external device 300 is width video data and the screen mode of the display device is portrait screen mode will be described.

Referring to FIG. 12(b), the control unit 170 of the display device 100 rotates the width video data 1110 received from the external device 300 by a specific angle in the direction opposite to the rotation direction of the display device and output a height screen including rotated width video data 1210.

At this time, the rotation direction of the display device 100 may refer to the direction in which the display device 100 rotates when changing from the width video mode to the height video mode.

Specifically, when the display device 100 is in the portrait screen mode and the width video data 1110 of FIG. 11 is output as is, the user views the video data rotated in a specific direction.

To prevent this, the control unit 170 of the display device 100 may rotate the width video data 1110 by a specific angle in a direction opposite to the rotation direction of the display device and output the rotated width video data 1210.

Additionally, the control unit 170 may map coordinates so that the long side of the rotated width video data 1210 corresponds to the short side of the display device, and the short side of the width video data 1210 corresponds to the long side of the display device.

By mapping, the height screen may include a third area where rotated width video data 1210 is output, and areas other than the third area may be created as a fourth area where black video data is output.

At this time, the fourth area where the black video data 1220 and 1230 are output may mean that the display unit 180 itself outputs a black screen.

As described above, the present invention will be able to provide users with a mirroring function without deterioration in video quality regardless of the screen mode of the display device by pre-rotating the received video data according to the screen mode of the external device 300.

Additionally, according to an embodiment of the present disclosure, it is possible for the external device 300 and the display device 100 to configure a mirroring system.

The above description is merely an illustrative explanation of the technical idea of the present invention, and various modifications and variations will be possible to those skilled in the art without departing from the essential characteristics of the present invention.

Accordingly, the embodiments disclosed in the present invention are not intended to limit the technical idea of the present invention, but rather to explain it, and the scope of the technical idea of the present invention is not limited by these embodiments.

The scope of protection of the present invention should be interpreted in accordance with the claims below, and all technical ideas within the equivalent scope should be construed as being included in the scope of rights of the present invention.

## Claims

1. A display device, comprising:
a communication unit configured to communicate with an external device;
a display unit;
a control unit configured to:
receive video data from the external device through the communication unit, and
output mirrored video data through the display unit based on whether the video data is rotated and a screen mode of the display device.

2. The display device of claim 1, wherein the control unit is configured to:
when the video data received from the external device is height video data rotated by a specific angle, and the screen mode of the display device is landscape screen mode,
rotate the height video data rotated by the specific angle in an opposite direction by the specific angle,
output a width screen containing height video data rotated in the opposite direction by the specific angle,

3. The display device of claim 2, wherein the width screen includes a first area where height video data rotated in the opposite direction by the specific angle is output and a second area where black video data is output.

4. The display device of claim 1, wherein the control unit is configured to:
when the video data received from the external device is height video data rotated by a specific angle, and the screen mode of the display device is portrait screen mode,
map the video data received from the external device to correspond to the screen size of the display device to output a height screen.

5. The display device of claim 1, wherein the control unit is configured to:
when the video data received from the external device is landscape video data and the screen mode of the display device is landscape screen mode,
map the width video data received from the external device to correspond to the screen size of the display device to output a width screen.

6. The display device of claim 1, wherein the control unit is configured to:
when the video data received from the external device is width video data and the screen mode of the display device is portrait screen mode,
rotate the width video data received from the external device by a specific angle in a direction opposite to the rotation direction of the display device, and
output a height screen including the rotated width video data.

7. The display device of claim 6, wherein the height screen includes a third area where the rotated width video data is output and a fourth area where black video data is output.

8. An operating method of a display device, comprising:
connecting to an external device;
receiving video data from the external device;
generating mirroring video data based on whether the video data is rotated and a screen mode of the display device; and
outputting the mirroring video data.

9. The method of claim 8, wherein the video data is height video data rotated by a specific angle when the external device is in portrait mode, and the video data is unrotated landscape video data when the external device is in landscape mode.

10. The method of claim 8, wherein the step of generating the mirroring video data based on whether the video data is rotated and the screen mode of the display device comprises
when the video data received from the external device is height video data rotated by a specific angle, and the screen mode of the display device is landscape screen mode,
rotating the height video data rotated by the specific angle in the opposite direction by the specific angle, and
generating a width screen including the height video data rotated in the opposite direction by the specific angle.

11. The method of claim 10, wherein the width screen includes a first area where height video data rotated in the opposite direction by the specific angle is output and a second area where black video data is output.

12. The method of claim 8, wherein the step of generating the mirroring video data based on whether the video data is rotated and the screen mode of the display device comprises:
when the video data received from the external device is height video data rotated by a specific angle, and the screen mode of the display device is portrait screen mode, mapping the video data received from the external device to correspond to the screen size of the display device to generate a height screen.

13. The method of claim 8, wherein the step of generating mirroring video data based on whether the video data is rotated and the screen mode of the display device comprises:
when the video data received from the external device is width video data and the screen mode of the display device is landscape screen mode, mapping width video data received from the external device to correspond to the screen size of the display device to generate a width screen.

14. The method of claim 8, wherein the step of generating mirroring video data based on whether the video data is rotated and the screen mode of the display device, comprises:
when the video data received from the external device is width video data and the screen mode of the display device is portrait screen mode, rotating the width video data received from the external device by a specific angle in a direction opposite to the rotation direction of the display device and generating a height screen including the rotated width video data.

15. The method of claim 14, wherein the height screen includes a third area where the rotated width video data is output and a fourth area where black video data is output.
